# EUROPÄISCHE PATENTANMELDUNG

(11) **EP 2 502 853 A1**
(43) Veröffentlichungstag der Anmeldung: **26.09.2012**
(21) Anmeldenummer: 12155803.5
(22) Anmeldetag: 16.02.2012
(51) Int. Cl.: B65D 83/54, B05B 7/12, B05B 7/24, A61C 19/00, B65D 83/62, B05B 12/02, B65D 83/44

(54) **Dosiervorrichtung**

(30) Priorität: 23.03.2011 DE 102011005996
(71) Anmelder: Kaltenbach & Voigt GmbH, 88400 Biberach (DE)
(72) Erfinder: Wiek, Hans-Dieter, 88454 Hochdorf (DE)
(74) Vertreter: Thun, Clemens

(57) **Zusammenfassung**

Die Erfindung betrifft eine Dosiervorrichtung (1) zur Entnahme eines Mediums (M1) aus einem unter Druck stehenden Medienbehälter (200), mit einem zur Abmessung einer Menge des Mediums (M1) ausgebildeten Dosierbehälter (100), der einen ersten Bereich (V1) und einen zweiten Bereich (V2) aufweist, wobei der erste von dem zweiten Bereich (V1, V2) durch ein bewegliches Trennelement (120) getrennt ist, und das Trennelement (120) eine dem ersten Bereich (V1) zugewandte erste Kontaktfläche (F1) aufweist, die den ersten Bereich (V1) begrenzt bzw. abschießt, und eine dem zweiten Bereich (V2) zugewandte zweite Kontaktfläche (F2), die den zweiten Bereich (V2) begrenzt bzw. abschließt, wobei die erste Kontaktfläche (F1) und die zweite Kontaktfläche (F2) unterschiedliche Flächenmaße aufweisen.

## Beschreibung

Die vorliegende Erfindung betrifft eine Dosiervorrichtung zur Entnahme eines Mediums aus einem unter Druck stehenden Medienbehälter, wobei das Medium insbesondere zur Pflege von medizinischen Instrumenten vorgesehen ist.

In der Medizintechnik ist die exakte Dosierung von Medien unerlässlich, um eine Behandlung oder einen anderen Arbeitsvorgang erfolgreich durchführen zu können. Dies betrifft unter anderem auch die Abmessung von Desinfektions-, Reinigungs- und Pflegemitteln für medizinische Geräte, besonders wenn diese in direktem Kontakt mit einem Patienten stehen. Vielfältige Wechselwirkungen sind dabei zu berücksichtigen, die unter Umständen sogar eine Gefahr für das Leben des Behandelten darstellen; beispielweise könnte eine inkorrekte Dosierung eines Mediums zur Reinigung und Pflege von medizinischen Geräten eine unzureichende Desinfektion oder eine Verdünnung bzw. Neutralisation eines Behandlungsmittels zur Folge haben.

Darüberhinaus ist im Falle der Dosierung von Pflegemitteln auch zu berücksichtigen, dass eine verlässliche Funktion des medizinischen Geräts über einen langen Zeitraum unter Minimierung des Wartungsaufwands gegeben sein muss. All diese Randbedingungen und Notwendigkeiten resultieren in der Forderung kleine Mengen an einem Medium genau abmessen zu können und zu einem bestimmten Zeitpunkt exakt abgeben zu können.

Dazu sind Dosierbehälter bekannt, die einen Hohlraum aufweisen, dessen Volumen so bemessen ist, dass exakt die abzumessende Medienmenge aufgenommen werden kann. Bei der Füllung mit Gasen ist es jedoch notwendig, dass neben der Temperatur des Gases auch der Fülldruck dieses Hohlraums in engen Toleranzen gehalten werden muss.

Ist vorgesehen einen abgeschlossenen unter Druck stehenden Medienbehälter mit dem Dosierbehälter zu koppeln, so tritt zusätzlich das Problem auf, dass der Druck, unter dem das Medium den Dosierbehälter erreicht, mit der Anzahl der Medienentnahmezyklen aus dem Medienbehälter abnimmt. Insbesondere bei kompressiblen Medien ist somit die abgemessene Medienmenge nur schwierig konstant zu halten.

Es ist daher Aufgabe der vorliegenden Erfindung eine Dosiervorrichtung bzw. ein Verfahren anzugeben, die bzw. das es ermöglicht eine exakte Medienmenge zu einem bestimmten Zeitpunkt abzugeben und dabei die Komplexität der Dosiervorrichtung und sowie deren Handhabung und Bedienungssicherheit optimiert.

Diese Aufgabe wird erfindungsgemäß mit einer Dosiervorrichtung nach einem der Ansprüche 1, 2 oder 5 sowie einem Verfahren gemäß Anspruch 15 gelöst. Weiterbildungen sind Gegenstand der abhängigen Ansprüche.

Erfindungsgemäß ist eine Dosiervorrichtung zur Entnahme eines Mediums aus einem unter Druck stehenden Medienbehälter mit einem zur Abmessung einer Menge des Mediums ausgebildeten Dosierbehälter vorgesehen, der einen ersten Bereich und einen zweiten Bereich aufweist, wobei der erste von dem zweiten Bereich durch ein bewegliches Trennelement getrennt ist. Weiterhin weist das Trennelement eine dem ersten Bereich zugewandte erste Kontaktfläche auf, die den ersten Bereich begrenzt bzw. abschließt, und eine dem zweiten Bereich zugewandte zweite Kontaktfläche, die den zweiten Bereich begrenzt bzw. abschließt. Die erste Kontaktfläche und die zweite Kontaktfläche weisen ferner unterschiedliche Flächenmaße auf.

Unter einer Kontaktfläche ist insbesondere der oder die Flächenabschnitte des Trennelements zu verstehen, der oder die mit einem in den ersten oder zweiten Bereich einbringbaren Medium in Berührung steht bzw. stehen können.

Mit Hilfe unterschiedlicher Flächenmaße der ersten und zweiten Kontaktflächen kann eine Dosiervorrichtung verwirklicht werden, die ein Trennelement aufweist, welches eine Differenzkraft erfährt, die bei identisch in den ersten und zweiten Bereichen vorliegendem Druck, also dem sogenannten Gleichgewichtsdruck, auftritt. Somit ergibt sich ein erweiterter Freiheitsgrad in den Steuerungsmöglichkeiten der Dosiervorrichtung, der es ermöglicht einen Steuerungszustand einer Dosiervorrichtung ohne Druckunterschied zwischen zwei Medien sicher einzustellen. Die Anzahl verschiedener Drücke die Medien zum Betrieb der Dosiervorrichtung aufweisen müssen, lässt sich damit reduzieren. Dadurch können beispielsweise zusätzliche Pumpen bzw. andere Fördermittel oder sekundäre Druckerzeuger für ein abzumessendes Medium eingespart werden und überdies liegt eine verbesserte Betriebssicherheit sowie eine erhöhte Genauigkeit in der Dosierung, vor, da insbesondere die Anzahl der in Wechselwirkung stehenden Komponenten und die zur Dosierung beitragenden Prozessschritte reduziert sind (Faltung der Erwartungswerte der Prozessschritte, Reduktion der Gaußverteilungsbreite).

Gemäß einem weiteren Aspekt der Erfindung ist eine Dosiervorrichtung zur Entnahme eines Mediums aus einem unter Druck stehenden Medienbehälter vorgesehen, mit einem zur Abmessung einer Menge des Mediums ausgebildeten Dosierbehälter, der einen ersten Bereich und einen zweiten Bereich aufweist, wobei der erste von dem zweiten Bereich durch ein bewegliches Trennelement getrennt ist. Ferner ist die Dosiervorrichtung in der Art ausgebildet, dass bei dem Gleichgewichtsdruck, welcher identisch auf Begrenzungsflächen des ersten und zweiten Bereichs wirkt, das Trennelement eine Kraftwirkung erfährt, die proportional bzw. umgekehrt proportional zu dem Gleichgewichtsdruck ist.

Neben der Reduktion der Anzahl möglicher Einflussgrößen auf die Güte der Dosiervorrichtung kann darüberhinaus durch eine zum Druck proportionale bzw. umgekehrt proportionale Differenzkraft die Geschwindigkeit eines Arbeitszyklus der Dosiervorrichtung leicht angepasst werden, was wiederum in einer einfacheren Kontrolle der Dosiervorrichtung resultiert.

Darüberhinaus kann insbesondere bei kompressiblen Medien eine zum Gleichgewichtsdruck proportionale Differenzkraft mit Hilfe einer Gegenkraft, welche der Differenzkraft entgegenwirkt, ein selbstregulierendes System festlegen, sodass Schwankungen bzw. eine Verringerung des Drucks des abzumessenden Mediums durch eine Anpassung bzw. Vergrößerung des abzumessenden Volumens ausgeglichen werden und dabei die abgemessene Stoffmenge konstant gehalten wird. Die Gegenkraft könnte beispielsweise durch Kompression eines Mediums in einem Kontrollbereich erzeugt werden, der vorzugsweise durch das Trennelement festgelegt wird bzw. mit dem das Trennelement in Verbindung steht. Insbesondere realisiert dies eine zum Gleichgewichtsdruck indirekt proportionale Kraft auf das Trennelement.

Bevorzugt ist der erste bzw. zweite Bereich als Hohlraum in dem Dosierbehälter ausgebildet, wobei insbesondere das Trennelement so beweglich ist, dass die Volumina bzw. Ausdehnung der beiden Bereiche bzw. Hohlräume zueinander durch die Bewegung des Trennelements veränderbar sind. Besonders bevorzugt entspricht einer Bewegung des Trennelements die Vergrößerung des ersten Bereichs bei gleichzeitiger Verkleinerung des zweiten Bereichs, sowie eine Rückbewegung des Trennelements einer analogen Rückbildung der ersten und zweiten Bereiche.

Besonders bevorzugt ist wenigstens einer der ersten oder zweiten Bereiche so ausgebildet, dass in einer Begrenzungsstellung des Trennelements ein zu bestimmendes, abzumessendes Volumen einer zu dosierenden Menge an Medium mit dem Volumen wenigstens einer der ersten oder zweiten Bereiche übereinstimmt.

Darüberhinaus kann auch vorgesehen sein, dass ein zu bestimmendes bzw. abzumessendes Volumen lediglich durch den Bewegungsspielraum des Trennelements zwischen zwei Begrenzungsstellungen festgelegt ist. Eine Weiterbildung kann vorsehen, dass wenigstens eine der Begrenzungsstellungen anpassbar ist.

Besonders bevorzugt ist das Trennelement in dem Dosierbehälter im Wesentlichen frei beweglich. Im Wesentlichen ist in diesem Fall so zu verstehen, dass die Berührungsflächen des Trennelements mit dem Dosierbehälter gegenüber der Oberfläche des Trennelements vernachlässigbar sind also beispielsweise weniger als ein fünftel der Oberfläche des Trennelements einnehmen, und sich bevorzugt auf Dichtungselemente beschränken. In einer Weiterbildung können dabei zwei räumlich separierte Dichtungselemente vorgesehen sein.

Bevorzugt ist die Position des Trennelements bei Gleichgewichtsdruck in der Art festgelegt, dass das abzumessende bzw. zu dosierende Medium aus dem Dosierbehälter ausgetrieben ist, also das Trennelement in eine Begrenzungsposition gelangt, in welcher der Bereich, der zur Abmessung bzw. Dosierung des Mediums ausgebildet ist, minimiert ist. Eine Minimierung ist dabei so aufzufassen, dass kein Bewegungsspielraum des Trennelements zur Verfügung steht, der eine Verkleinerung des entsprechenden Bereichs erlaubt.

Somit ist eine einfache Möglichkeit das abzumessende Medium aus dem Dosierbehälter auszutreiben dadurch festgelegt, dass ein identischer Druck in dem ersten und zweiten Bereich hergestellt ist.

In einer Weiterbildung der Erfindung wird das Trennelement durch einen Kolben gebildet, der wenigstens teilweise in einer Bohrung des Dosierbehälters im Wesentlichen frei beweglich ist. Insbesondere durch eine vorteilhafte Geometrie der Kontaktflächen, die vorzugsweise rund, elliptisch oder polygon ausgebildet sind, lässt sich auf einfache Weise auch die Größe der Differenzkraft festlegen. Bevorzug weisen die Kontaktflächen auch eine zueinander unterschiedliche Form auf.

Ein weiterer Aspekt der Erfindung betrifft eine Dosiervorrichtung zur Entnahme eines Mediums aus einem unter Druck stehenden Medienbehälter, mit einem zur Abmessung einer Menge des Mediums ausgebildeten Dosierbehälter, der einen ersten Bereich und einen zweiten Bereich einschließt, wobei der Medienbehälter mehrere von einander getrennte Medien enthält, insbesondere wenigstens ein erstes und zweites Medium, wobei das erste Medium mit dem ersten Bereich in der Art in Verbindung steht, dass das Medium in den Dosierbehälter gelangen kann, und das zweite Medium einen Druck aufweist, der in der Art auf das erste Medium wirkt, dass das erste Medium in den Dosierbehälter gelangt, und vorzugsweise der Dosierbehälter dazu ausgebildet ist, mit Hilfe des Drucks das erste Medium aus dem Dosierbehälter zu treiben.

Auf besonders vorteilhafte Weise ist somit realisiert, dass eines der Medien, in diesem Fall das zweite Medium eine Druckreferenz darstellt, die für eine Vielzahl von Steuerungsfunktionen der Dosiervorrichtung benutzt werden kann. Neben dem bereits erläuterten Vorteil, dass dadurch die Anzahl der wechselwirkenden unterschiedlichen Prozessschritte und Parameter reduziert werden kann, ist so auch die Möglichkeit geschaffen den Druck des zu dosierenden, ersten Mediums in dem Medienbehälter nahezu konstant zu halten, sodass auch dadurch die Genauigkeit der Dosierung verbessert ist.

Eine Weiterbildung könnte beispielsweise die Möglichkeit der Druckwandlung zwischen dem ersten und dem zweiten Medium vorsehen, sodass bei einer signifikanten Drucküberhöhung des zweiten Mediums gegenüber dem ersten Medium nahezu keine Änderung des durch das erste Medium aufgenommen Drucks wahrnehmbar ist.

Ferner könnte zur Konstanthaltung des Drucks des ersten Mediums vorgesehen sein, dass in dem Medienbehälter die Medienmenge bzw. das Volumen des ersten Mediums kleiner ist als die Medienmenge bzw. das Volumen des zweiten Mediums. Bevorzugt unterschieden sich die Medienmengen bzw. die Volumina um den Faktor 2 bis 5.

Darüberhinaus sind weitere Möglichkeiten zur Konstanthaltung des Drucks des ersten Mediums denkbar.

Dazu sieht eine Weiterbildung des Erfindungsgedankens vor, dass sowohl der Dosierbehälter als auch der Medienbehälter neben Anschlüssen, die eine Verbindung zwischen dem Medienbehälter und dem Dosierbehälter realisieren, ferner einen zusätzlichen Medienanschluss aufweisen. Dieser kann im Falle des Medienbehälters beispielsweise zu einer Füllung mit einem Medium dienen, sodass mit Hilfe des Medienanschlusses der Druck eines Mediums innerhalb von bestimmten Toleranzgrenzen gehalten werden kann und beispielsweise bei einem Absinken des Drucks unter einen Schwellwert ein Medium neuerlich in den Behälter eingebracht werden kann. Insbesondere kann es sich dabei um das zweite Medium handeln, sodass damit die Schwankungsbreite eines Referenzdrucks repräsentiert durch den Druck des zweiten Medium reduziert werden kann, und somit die Dosiergenauigkeit entscheidend verbessert ist.

Besonders vorteilhaft ist nun, wenn der Referenzdruck des zweiten Mediums über den zusätzlichen Medienanschlusses des Dosierbehälters in den zweiten Bereich des Dosierbehälters übertragen werden kann.

Beispielsweise kann der zusätzliche Anschluss auch mit einer gemeinsamen Versorgungsleitung verbunden sein.

In einer bevorzugten Ausführungsform der Erfindung weist wenigstens einer der ersten oder zweiten Bereiche eine Einlassöffnung und eine - vorzugsweise räumlich getrennte - Auslassöffnung auf. Besonders vorteilhaft kann vorgesehen sein, dass die Einlassöffnung mit einem ersten Ventil verbunden ist und beispielsweise die Auslassöffnung mit einem zweiten Ventil. In einer Weiterbildung unterscheiden sich die Arbeitsdrücke des ersten und des zweiten Ventils. Bevorzugt ist das erste Ventil als Rückschlagventil ausgebildet.

Ein weiterer Aspekt der Erfindung sieht einen Medienbehälter für ein Pflegegerät zur Reinigung- bzw. Pflege von medizinischen Instrumenten vor, mit einem Aufnahmeraum für ein erstes Medium zur Pflege bzw. Reinigung von medizinischen Instrumenten und einem Aufnahmeraum für ein zweites Medium, wobei der Aufnahmeraum für das erste Medium in Druckaustausch mit dem Aufnahmeraum für das zweite Medium steht, und der Aufnahmeraum für das erste Medium mit Hilfe eines externen Drucks, der auf den Aufnahmeraum für das zweite Medium wirkt, entleerbar ist.

Somit kann insbesondere der Transport des Medienbehälters vereinfacht, sowie der Aufwand zur Medienversorgung eines Pflegegeräts optimiert werden. Die Applikation eines externen Drucks auf das zweite Medium schafft die Möglichkeit zu einer drucklosen Herstellung, drucklosen Lagerung und einem drucklosen Transport des Medienbehälters. Darüberhinaus ist der Medienbehälter auf einfache Weise mit dem ersten Medium wiederbefüllbar. Ferner kann als externe Druckquelle bzw. als zweites Medium ein umweltfreundliches Medium wie beispielsweise Druckluft gewählt werden.

Eine Weiterbildung der Erfindung sieht vor, die erfindungsgemäße Dosiervorrichtung mit einem Pflegegerät für medizinische Geräte zu kombinieren. Dazu ist es vorteilhaft die Dosiervorrichtung und das Pflegegerät in ein gemeinsames Gehäuse aufzunehmen bzw. eine gemeinsame Grundplatte dafür vorzusehen.

Ferner kann auch die Kombination eines vorbeschriebenen Medienbehälters in dem Pflegegerät für medizinische Geräte vorgesehen sein. In diesem Fall sind keine zusätzlichen Absicherungsmaßnahmen für den Pflegemittelbehälter in dem Pflegegerät notwendig, da der Medienbehälter nach Abschalten des Pflegegeräts drucklos gehalten werden kann. Es kann also nach dem Abschalten des Pflegegeräts ein druckloser Medienbehälter, insbesondere eine Pflegemitteldose bzw. Spraydose, mit einem ersten Aufnahmeraum für ein erstes Medium, der beispielsweise ein Pflegemittel bzw. Pflegeöl aufnimmt, realisiert werden, der erst durch Zugabe von externem Druck entleert werden kann.

Besonders bevorzugt ist die Dosiervorrichtung zur Abmessung eines Pflegemittels für medizinische Instrumente, insbesondere zahnmedizinische Instrumente ausgebildet.

In einem Ausführungsbeispiel der Erfindung steht der Dosierbehälter in Verbindung mit einem Zerstäuber für das zu dosierende Medium, der beispielsweise ein Pflegemittel einem zahnmedizinischen Instrument, insbesondere dem Innenraum des zahnmedizinischen Instruments zuführt.

Im Rahmen des Erfindungsgedankens kann darüberhinaus vorgesehen sein, dass der Zerstäuber in Verbindung mit einem Druckluftanschluss steht, wobei bevorzugt der Dosierbehälter ebenfalls mit einem Druckluftanschluss verbunden ist. Beispielsweise kann es sich in diesem Fall um eine Verbindung zum zweiten Bereich des Dosierbehälters handeln.

Weiterhin ist ebenfalls denkbar, dass der Druckluftanschluss mit dem zusätzlichen Medienanschluss des Medienbehälters verbunden ist, und so einen Referenzdruck sowohl in den Dosierbehälter als auch in den Medienbehälter über das zweite Medium - in diesem Fall die Druckluft - eingebracht werden kann.

Darüberhinaus könnte der Druckluftanschluss mit dem zweiten Ventil, welches mit der Auslassöffnung des Dosierbehälters verbunden ist, in Verbindung stehen.

Dabei ist anzumerken, dass als zweites Medium neben der beschriebenen Druckluft durchaus andere unter Druck stehende Medien wie beispielsweise Stickstoff oder Kohlenstoffoxide vorgesehen sein können, sodass der Druck des zweiten Mediums eine Referenzgröße bzw. einen Referenzdruck bildet, der bzw. die eine Vielzahl von Komponenten des Pflegesystems - insbesondere die Dosiervorrichtung und den Zerstäuber steuert, wodurch wiederum die Schwankungsbreite des Pflegeprozesses aufgrund der Reduktion der wechselwirkenden Parameter bzw. Komponenten reduziert wird und das Pflegeergebnis optimiert werden kann.

Hervorzuheben ist in diesem Fall, dass ein Druck bzw. eine Kraft direkt durch das Medium zur Verfügung gestellt wird, und dies beispielsweise über die Verwendung von Elektrizität hinausgeht, die zur Erzeugung einer Kraft immer eine Wandlervorrichtung erfordert, deren Wirkungsgrad überdies in der Regel sehr schlecht ist.

Insbesondere wird dies in einem weiteren Aspekt der Erfindung deutlich. Dieser betrifft ein Verfahren zur Entnahme eines Mediums aus einem unter Druck stehenden Medienbehälter, mit einer erfindungsgemäßen Dosiervorrichtung. Das Verfahren umfasst die Schritte Überführen eines Mediums aus dem Medienbehälter in einen ersten Bereich des Dosierbehälters bis der erste Bereich vollständig gefüllt ist und Austreiben des Mediums aus dem Dosierbehälter durch Füllen des zweiten Bereichs mit einem Medium, bevorzugt einem anderen Medium.

Das Überführen des Mediums aus dem Medienbehälter in den ersten Bereich des Dosierbehälters kann mit Hilfe des in dem Medienbehälter vorliegenden Drucks des ersten Mediums - in diesem Fall ein Pflegeöl - erfolgen. Dabei wird das Trennelement so ausgelenkt, dass der erste Bereich eine Größen- bzw. Ausdehnungsänderung erfährt, welche der Menge des abzumessenden Mediums entspricht. Ferner kann in diesem Fall vorgesehen sein, dass der Druck des ersten Mediums durch Wechselwirkung mit einem zweiten Medium in dem Medienbehälter - in diesem Fall Druckluft - festgelegt ist.

Das Austreiben aus dem Medienbehälter durch ein zweites, bevorzugt anderes Medium - in diesem Fall Druckluft - kann durch Anlegen eines identischen Drucks an den zweiten Bereich des Dosierbehälters erfolgen.

Eine bevorzugte Weiterbildung sieht insbesondere vor, dass der Druck, unter dem das andere Medium in den Dosierbehälter eingebracht wird, nicht den Druck, unter dem das Medium in den Dosierbehälter eingebracht wird, übersteigt.

Nach erfolgter Abmessung und dem Austreiben des ersten Mediums aus dem Dosierbehälter kann das erste Medium dann beispielsweise einem Zerstäuber zugeführt werden, der das erste Medium vernebelt. Der Betrieb des Zerstäubers, insbesondere die Vernebelung, kann dabei mit Hilfe des zweiten Mediums erfolgen, sodass einerseits die Dosierung im Wesentlichen für ein flüssiges Medium durchgeführt werden kann, dessen Volumen nahezu unabhängig von Druckschwankungen bleibt. Andererseits kann das zweite Medium gasförmig gehalten sein, und so gleichzeitig zur Aufschäumung bzw. Vernebelung des ersten Mediums in dem Zerstäuber beitragen, wobei das zweite gasförmige Medium besagte Referenzgröße bzw. Referenzdruck zur Verfügung stellt, der die Pflegevorrichtung betreibt und steuert.

Ein weiterer Aspekt der Erfindung betrifft ein Verfahren zum Betrieb eines Desinfektions- und Pflegegeräts für zahnärztliche Instrumente, wobei vorgesehen ist eine Dosiervorrichtung für ein erstes Medium und wenigstens eine weitere Vorrichtung zur Ausbringung eines ersten Mediums, durch ein gemeinsames unter Druck stehendes zweites Medium, zu steuern.

Ferner ist darauf hinzuweisen, dass, wie aus dem vorbeschriebenen deutlich wird, eine Kombination der Weiterbildungen der Erfindungen sowie der verschiedenen Aspekte der Erfindung nicht ausgeschlossen ist.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Fig. 1:: ein Ausführungsbeispiel einer erfindungsgemäßen Dosiervorrichtung;
- Fig. 2:: eine Detailansicht eines Dosierbehälters;
- Fig. 3:: wiederum eine Detailansicht eines Dosierbehälters;
- Fig. 4:: eine Detailansicht eines Medienbehälters; und
- Fig. 5:: ein Kombinationsbeispiel einer erfindungsgemäßen Dosiervorrichtung mit einem Zerstäuber in einem zahnmedizinischen Pflegegerät.

Bei ärztlichen oder zahnärztlichen Handstücken handelt es sich um rohrförmige Teile, die der Arzt während der Behandlung als Griffhülse ergreift. Ein üblicherweise in der zahnmedizinischen Praxis verwendetes Handstück ist ein sogenanntes Bohrhandstück, das an seinem vorderen Ende ein Behandlungswerkzeug, insbesondere einen Bohrer trägt und mit seinem hinteren Ende mittels einer Kupplung mit einem Versorgungsschlauch gekoppelt ist. Durch das Handstück erstrecken sich Versorgungsleitungen für Energie zum Antrieb des Behandlungsinstruments sowie Fluidleitungen für Behandlungsmedien, beispielsweise Luft und/oder Wasser. Unterschieden wird oftmals zwischen sogenannten Turbinen-Handstücken, bei denen zur Versorgung einer im vorderen Endbereich angeordneten Turbine Druckluft vorgesehen ist, und sogenannten Motor-Handstücken, welche als Antriebseinheit einen Elektromotor aufweisen.

Zur Aufrechterhaltung der Funktion der Handstücke bedarf es von Zeit zu Zeit einer Pflege, insbesondere der drehbar gelagerten Antriebselemente. Ferner führen die in der zahnärztlichen Praxis immer weiter ansteigenden Hygieneanforderungen dazu, dass eine Aufbereitung von Handstücken in regelmäßigen zeitlichen Abständen zu erfolgen hat. Die erfolgreiche Aufbereitung und Einhaltung der entsprechenden Vorgaben muss hierbei durch den Zahnarzt lückenlos dokumentiert werden, was einen nicht unerheblichen personellen und organisatorischen Aufwand nach sich zieht.

Die maschinelle automatische Aufbereitung mit Hilfe eines Reinigungs- und Pflegesystems erfüllt die Forderung in einer zahnärztlichen Praxis bzw. Klinik nach einer sicheren und reproduzierbaren Reinigung und Pflege der Handstücke bzw. Winkelstücke, Turbinen, Spannzangen oder anderer zahnärztlicher Instrumente, die insbesondere eine Innenreinigung und Pflege mit Öl benötigen.

Ein entsprechendes Reinigungs- bzw. Pflegesystem sieht beispielsweise folgenden Reinigungs- und Pflegeablauf vor, der insbesondere auch die Innenreinigung und Pflege der zahnärztlichen Instrumente betrifft.

Bei parallelem Pflegeablauf, erfährt jedes Instrument eine separate Reinigung, um insbesondere eine gezielte Innenreinigung zu ermöglichen. Zur Innenreinigung wird zunächst eine sogenannte "Cleanlösung" dosiert, und als Nebel zerstäubt in einen Innenraum des Instruments, beispielsweise einen Getriebe- oder Spraykanal eines Handstücks, eingebracht. Die Zerstäubung zur Einbringung des Nebels in das zahnärztliche Instrument erfolgt dabei mit Hilfe von Druckluft, die nach EN-ISO07494-2 aufbereitet ist. Darüberhinausgehend kann die Druckluft ebenfalls dazu genutzt werden, während einer Einwirkzeit der "Cleanlösung" diese im zahnärztlichen Instrument zu bewegen. Nach Ablauf der Einwirkzeit erfolgt eine Spülung des zahnärztlichen Instruments mit VE Wasser, welches beispielsweise einen Leitwert kleiner als 50 µs aufweist. Anschließend ist ein Ausblasen des VE Wassers mittels besagter Druckluft vorgesehen, wobei die beschriebenen Schritte beispielsweise bezüglich Zeit, Anzahl der Wiederholungen, der Medienmenge oder der Druckluftsteuerung an bestimmte Instrumente oder Kombinationen von zu reinigenden Instrumenten angepasst und optimiert werden können.

Nach Abschluss der Reinigung erfolgt eine Pflege, insbesondere eine Ölschmierung für jedes zahnärztliche Instrument einzeln, um eine genau dosierte Menge an Pflegemittel dem Instrument zuführen zu können. Das Pflegemittel wird ebenfalls als Nebel zerstäubt in den Innenraum eines zahnärztlichen Instruments, beispielsweise einen Getriebekanal, eingebracht. In analoger Weise zu beschriebener Reinigung findet zur Vernebelung ebenfalls Druckluft Verwendung; das Instrument wird nach erfolgter Pflege lediglich mit Druckluft ausgeblasen. Zur Verbesserung der Verdrängung von überschüssigem Öl kann dies auch pulsweise erfolgen. Dabei kann insbesondere vorgesehen sein, dass die Dosierung des Pflegemittels mittels einer Zeitsteuerung optimiert wird.

Das Reinigungs- und Pflegegerät umfasst dabei die Möglichkeit mehrere zahnärztliche Instrumente gleichzeitig aufzubereiten. Eine sogenannte "state machine" ermöglicht es die individuell für jedes zahnärztliche Instrument vorgesehenen Steuerungsabläufe so zu koordinieren, dass eine zeitliche Optimierung erreicht wird.

Zum Betrieb des vorbeschriebenen Reinigungs- und Pflegegeräts sind insbesondere die Medien Druckluft mit 4-6 bar und einem Volumenstrom >50 1/min aufbereitet nach EN-ISO7494-2, Pflegeöl (Dentalöl), "Cleanlösung", VE Wasser (Leitwert <50µS) und eine Stromversorgung mit 100-240V AC (50-60Hz) vorgesehen.

Insbesondere wird deutlich, dass in diesem Ausführungsbeispiel die Medien "Cleanlösung" und "Pflegeöl" zu dosieren sind, und das Medium Druckluft wesentlich zur gemeinsamen Steuerung und den Betrieb der Komponenten des Pflegesystems beiträgt. Im gewählten Ausführungsbeispiel repräsentieren also die Medien "Cleanlösung" bzw. "Pflegeöl" ein erstes Medium M1, das in diesem Fall flüssig ist, und das Medium "Druckluft" ein zweites Medium M2, das im beschriebenen Ausführungsbeispiel gasförmig ist.

Eine genaue Dosierung der Abgabemenge der Medien an das jeweilige Instrument trägt zu einer Optimierung des Reinigungs- und Pflegequalität bei und fördert darüberhinaus auch den zeitlichen Ablauf der beschriebenen Schritte, beispielsweise durch eine reduzierte Ausblaszeit des Pflegeöls, da die Menge des überschüssigen Öls optimiert ist.

Das Pflegegerät umfasst deshalb eine Dosiervorrichtung 1 zur Entnahme eines Mediums M1 aus einem unter Druck stehenden Medienbehälter 200.

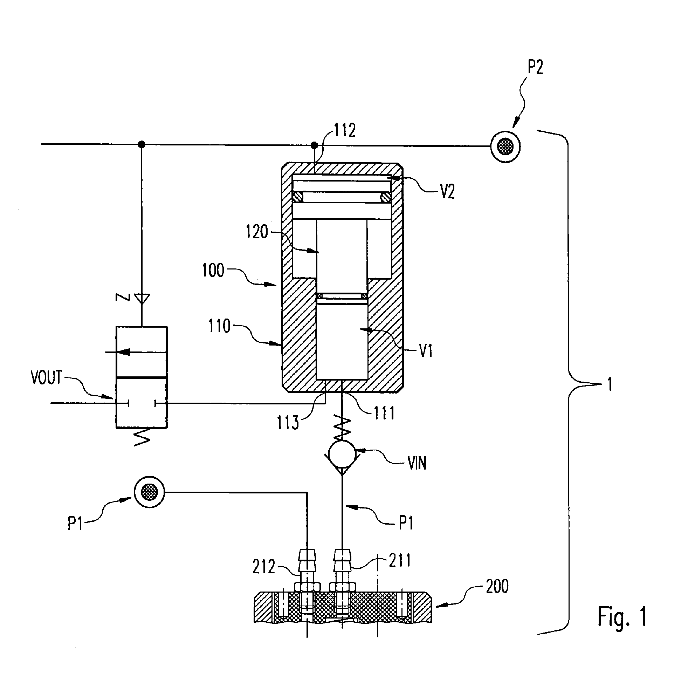

Wie aus Figur 1 deutlich wird, weist die Dosiervorrichtung 1 erfindungsgemäß einen Dosierbehälter 100 auf, mit einem ersten Bereich V1 und einem zweiten Bereich V2, wobei der erste von dem zweiten Bereich V1 bzw. V2 durch ein bewegliches Trennelement 120 getrennt ist.

Ferner weist das Pflegesystem einen unter Druck stehenden Medienbehälter 200 auf, der mit dem Dosierbehälter 100 in Medienaustausch steht. Die Verwendung eines unter Druck stehenden Medienbehälters 200 erübrigt die Verwendung von zusätzlichen Pumpen oder einer Vielzahl von Betätigungsmitteln zur Förderung und Zuführung der Medien, sodass die Komplexität im Aufbau und Betrieb des Pflegegeräts reduziert werden kann. Neben der bereits angedeuteten Verbesserung der Dosierung kann insbesondere dadurch auch die Wahrscheinlichkeit einer Fehlbedienung gesenkt werden.

Das Pflegesystem weist bevorzugt einen Medienbehälter 200 auf, der mehrere von einander getrennte Medien M1 bzw. M2, wenigstens ein erstes und zweites Medium M1 bzw. M2, enthält, wobei das erste Medium M1 mit dem ersten Bereich V1 des Dosierbehälters 100 in der Art in Verbindung steht, dass das Medium M1 in den Dosierbehälter 100 gelangen kann und das zweite Medium M2 einen Druck P1 aufweist, der in der Art auf das erste Medium M1 wirkt, dass das erste Medium M1 in den Dosierbehälter 100 gelangt. Somit kann der Druck P1 des Mediums M2 dazu dienen einen Referenzpunkt der Drucksynchronisation festzulegen und wie bereits angedeutet eine Vielzahl von weiteren Komponenten des Pflegesystems steuern bzw. betreiben. Insbesondere kann bereits der Druck P1 ausreichen, um das erste Medium M1 aus dem Dosierbehälter 100 auszutreiben.

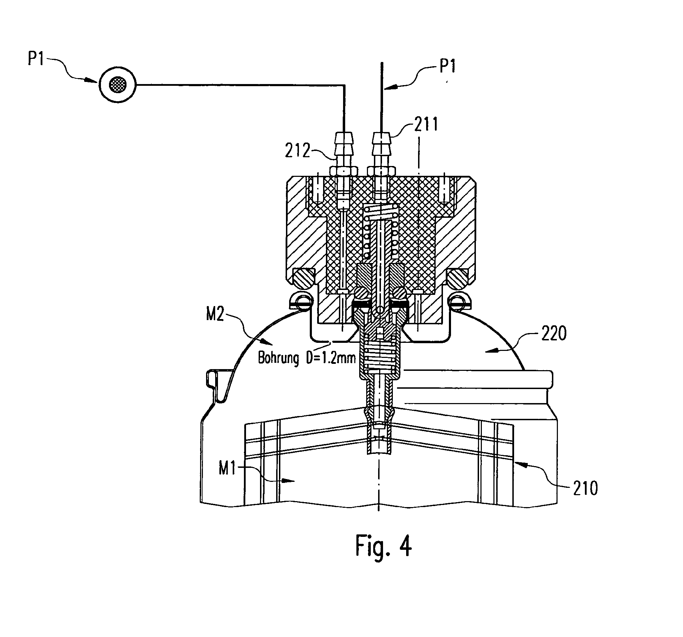

Wie insbesondere aus dem Beispiel von Figur 4 deutlich wird, steht in dem Medienbehälter 200 ein Aufnahmeraum 220 für das zweite Medium M2 in Druckaustausch mit einem Aufnahmeraum 210 für das erste Medium M1, wobei die Aufnahmeräume 210, 220 bevorzugt durch ein flexibles Material voneinander getrennt sind. Im beschriebenen Ausführungsbeispiel ist der Druckaustausch zwischen beiden Aufnahmeräumen 210, 220 so ausgelegt, dass zwischen beiden Aufnahmeräumen 210, 220 keine Druckdifferenz der ersten bzw. zweiten Medien M1 bzw. M2 herrscht. Besonders vorteilhaft ist vorgesehen, dass der Aufnahmeraum 210 für das Medium M1 einen flexiblen Beutel umfasst, der bevorzugt von dem Aufnahmeraum 220 für das zweite Medium 220 vollständig umgeben ist.

Weiterhin ist vorstellbar, dass der Medienbehälter eine Vielzahl von Beuteln enthält, die mit einem die Beutel umgebenden zweiten Medium M2 in Druckaustausch stehen. Bevorzugt können die Medien in den Beuteln auch unterschiedlich gewählt werden. Besonders vorteilhaft ist, wenn die Mengen der ersten bzw. zweiten Medien M1 bzw. M2 sich unterscheiden, beispielsweise kann in diesem Fall die Menge des zweiten Mediums M2 die Menge des ersten Mediums M1 übersteigen, sodass bei Entnahme einer Menge des ersten Mediums M1 aus dem Medienbehälter der Druck P1 des Mediums M2 nahezu unverändert ist und auf das erste Medium M1 übertragen werden kann.

Im Ausführungsbeispiel von Figur 4 ist der Medienbehälter 200 durch eine Spraydose gebildet, die ein erstes Medium M1, in diesem Fall ein Pflegeöl für zahnärztliche Instrumente aufnimmt. Die Spraydose weist einen Medienanschluss 211 auf, der den Austausch des ersten Mediums M1 mit dem Dosierbehälter 100 ermöglicht.

Im Ausführungsbeispiel von Figur 1 sind in dem Dosierbehälter 100 der erste und zweite Bereich V1 bzw. V2 als Hohlraum in einem Zentralkörper 110 ausgeführt.

Der erste Bereich V1 ist über ein Ventil VIN, vorzugsweise ein Rückschlagventil, mit einem Medienbehälter 200 verbunden, der ein Medium M1 - das Pflegeöl - unter Druck bevorratet, sodass der Bereich V1 ein abzumessendes Volumen des Mediums M1 festlegen kann. Der zweite Bereich V2 weist eine Zuführung für ein weiteres Medium M2, in diesem Fall Druckluft auf. Die mit der Zuführung verbundene Druckluftquelle ist dazu ausgebildet, auf Anforderung Druckluft zur Verfügung zu stellen.

In einem ersten Schritt zur Entnahme eines ersten Mediums M1 aus dem Medienbehälter 200 ist der zweite Bereich V2 lediglich mit dem Umgebungsluftdruck beaufschlagt, eine entsprechender Anschluss 212 des zweiten Bereichs V2 ist in diesem Fall mit der Umgebung oder einem entsprechenden Druckäquivalent verbunden. Der Druck P1 des ersten Mediums P1, der den Druck im zweiten Bereich V2 - also in diesem Moment den Luftdruck - übersteigt, treibt das Medium M1 über das Ventil VIN, bevorzugt als Rückschlagventil ausgebildet, in den ersten Bereich V1.

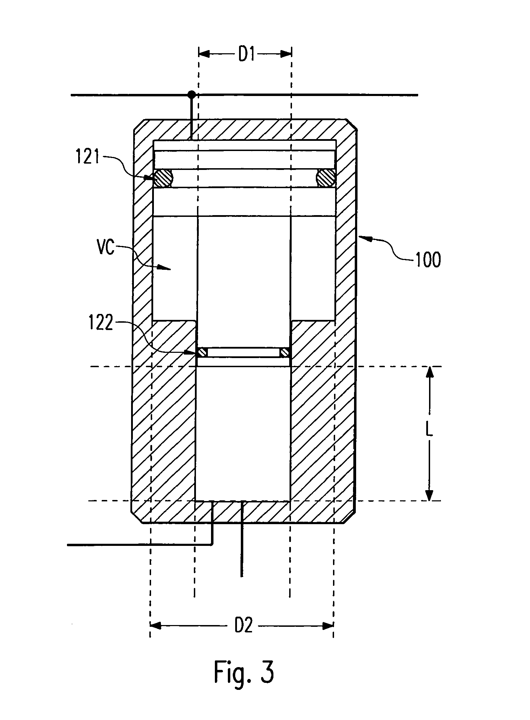

Der Bewegungsspielraum L (Fig. 3) des Trennelements 120, der eine maximale bzw. minimale Ausdehnung des ersten Bereichs V1 festlegt, ist in diesem Fall so bemessen, dass die Differenz zwischen maximaler und minimaler Ausdehnung des ersten Bereichs V1 zur abzumessenden Menge an Medium M1 korrespondiert, insbesondere zu einem abzumessenden Volumen des Mediums M1, sodass der Bewegungsspielraum L des Trennelements 120 insbesondere ein Messvolumen bzw. Dosiervolumen festlegt. Möglichkeiten zur Optimierung der Festlegung des Bewegungsspielraums L und damit zur Festlegung des Messvolumens werden weiterer Folge beschrieben.

Das Trennelement 120 ist in diesem ersten Schritt so ausgelenkt, dass der erste Bereich V1 maximiert ist, also das Medium M1 in den als Messvolumen ausgebildeten Bereich V1 eingebracht ist. Insbesondere ist eine Maximierung so zu verstehen, dass kein Bewegungsspielraum L des Trennelements 120 zur Verfügung steht, der eine Erweiterung des ersten Bereichs V1 zulässt.

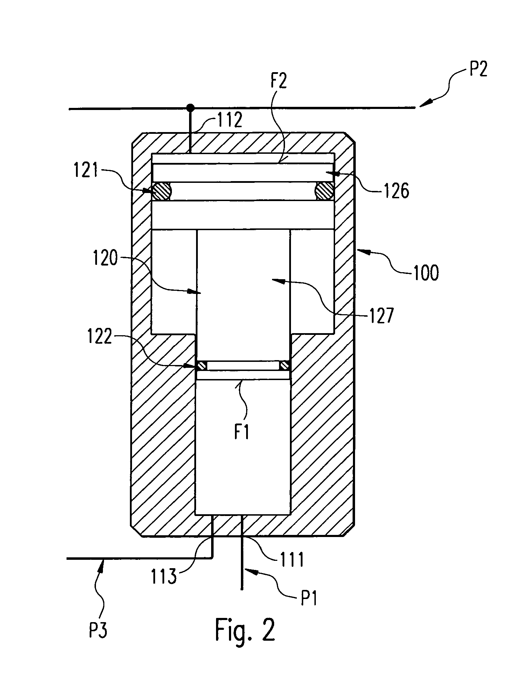

Gemäß einem Aspekt der Erfindung weist das Trennelement 120 eine dem ersten Bereich V1 zugewandte erste Kontaktfläche F1 auf, die den ersten Bereich V1 begrenzt bzw. abschießt, und eine dem zweiten Bereich V2 zugewandte zweite Kontaktfläche F2, die den zweiten Bereich V2 begrenzt bzw. abschließt. Die erste Kontaktfläche F1 und die zweite Kontaktfläche F2 weisen dabei unterschiedliche Flächenmaße auf. Insbesondere befindet sich das Trennelement 120 lediglich über die erste bzw. zweite Kontaktfläche F1 bzw. F2 in Berührung mit den Medien M1 bzw. M2. Eine Differenzkraft stellt sich bei Gleichgewichtsdruck, also einem Druck der identisch auf die Begrenzungsflächen des ersten und zweiten Bereichs V1 bzw. V2 wirkt, proportional zur Differenz des Flächenmaßes D2 - D1 der Kontaktflächen F1 bzw. F2 ein. Eine entsprechende Detailansicht des Dosierbehälters 100 mit zugehörigem Trennelement 120 ist beispielsweise in den Figuren 2 und 3 gezeigt.

Wie aus dem dargestellten Ausführungsbeispiel ersichtlich, ist das Trennelement 120 in dem Dosierbehälter 100 im Wesentlichen frei beweglich und steht besonders bevorzugt lediglich über Dichtungselemente 121 bzw. 122 mit dem Dosierbehälter 120 in Kontakt. Darüberhinaus kann ebenfalls vorgesehen sein, dass das Trennelement 120 mit einem Gegenkrafterzeuger verbunden ist bzw. selbst entsprechende Mittel aufweist, die beispielsweise mit dem Zentralkörper 110 in der Art wechselwirken, dass eine Gegenkraft realisiert ist.

Das beschriebene Ausführungsbeispiel sieht als Trennelement 120, insbesondere als linear verschiebbares Trennelement 120, wie beispielsweise aus den Figuren 2 und 3 hervorgeht, einen Kolben vor, der in einer Ausnehmung, vorzugsweise einer Bohrung, im Zentralkörper 110 des Dosierbehälters 100 verschiebbar ist.

Dabei ist insbesondere hervorzuheben, dass die Form der Ausnehmung nicht auf eine Bohrung beschränkt ist, die beispielsweise ein rundes Bohrloch aufweist. Vielmehr kann eine beliebige Querschnittsform der Ausnehmung vorgesehen sein, die beispielsweise polygone insbesondere rechteckige, quadratische, dreieckige oder auch elliptische Querschnitte umfassen kann. Eine bevorzugte Weiterbildung sieht vor, dass die Querschnittsformen in den ersten und zweiten Bereichen V1 bzw. V2 zueinander unterschiedlich sind.

Der Kolben bzw. das Trennelement 210 umfasst ein erstes und ein zweites Endstück 126, 127, wobei das erste Endstück 126 einen Bereich aufweist, der die Form und Ausdehnung eines Querschnitts der Bohrung bzw. Ausnehmung in dem ersten Bereich V1 annimmt und das zweite Endstück 127 einen Bereich, der die Form und Ausdehnung eines Querschnitts der Bohrung bzw. Ausnehmung in dem zweiten Bereich V2 annimmt. Die dem ersten Bereich V1 zugewandte Fläche des ersten Endstücks 126 legt die Kontaktfläche F1 fest, die dem zweiten Bereich V2 zugewandte Fläche des zweiten Endstücks 127 die Kontaktfläche F2.

Wie in Figur 3 dargestellt, umfassen die ersten und zweiten Endstücke 126 bzw. 127 jeweils Dichtungselemente 121 bzw. 122 - insbesondere Dichtungsringe - die jeweils einen mediendichten Abschluss der ersten und zweiten Bereiche V1 bzw. V2, insbesondere des Trennelements 120 gegenüber dem Zentralkörper 120 bedingen.

Das Trennelement 120 bzw. der Kolben ist in dem Dosierbehälter 100 im Wesentlichen frei beweglich und steht bevorzugt lediglich über die Dichtungselemente 121 bzw. 122 in Kontakt mit dem Dosierbehälter 100.

Die Dichtungselemente 121 bzw. 122 sind bevorzugt beabstandet voneinander angebracht, und schließen so gleichzeitig einen Bereich VC zwischen dem ersten und zweiten Endstück 126 bzw. 127 mediendicht ab.

Bevorzugt ist das Trennelement 120 in den Zentralkörper 110 so eingebracht, dass der Bereich VC evakuiert ist. Dazu weist der Zentralkörper 110 Abschnitte auf, die formschlüssig das Trennelement 120 im Bereich zwischen einem ersten Dichtungselement 121 und einem zweiten Dichtungselement 122 umgreifen, sodass beim Montage das Trennelement in eine Position gebracht werden kann, in welcher der Bereich VC im Wesentlichen evakuiert ist.

In einer Weiterbildung ist der Zentralkörper, bevorzugt im Übergangsbereich zwischen dem ersten und zweiten Bereich V1 bzw. V2, mit einem Anschluss versehen, der mit dem Bereich VC in Verbindung steht. Somit kann beispielsweise zu einem vorgegebenen Zeitpunkt ein Referenzmedium mit dem Bereich VC in Verbindung gebracht bzw. in den Bereich VC eingebracht werden, das eine Gegenkraft zur Differenzkraft bei Gleichgewichtsdruck erzeugt. Der Bereich VC kann beispielsweise nach dem Einbringen des Referenzmediums abgeschlossen sein, oder geöffnet verbleiben, sodass eine Vielzahl unterschiedlicher Gegenkräfte mit abweichenden Charakteristika realisiert werden können und in einfacher Weise ein Gegenkrafterzeuger realisiert ist.

Das dargestellte Ausführungsbeispiel zeigt einen Kolben mit gegenüberliegenden ersten und zweiten Endstücken 126 bzw. 127, jedoch ist hervorzuheben, dass sich die Erfindung nicht auf diese Ausführungsform beschränkt, vielmehr sind unterschiedliche Anordnungspositionen der ersten und zweiten Endstücke 126 bzw. 127 denkbar. Beispielsweise kann das erste oder zweite Endstück eine Vielzahl von separierten Kontaktflächen F1 bzw. F2 umfassen, deren Gesamtmaß jedoch erfindungsgemäß ausgestaltet ist. Insbesondere umfasst diese Ausgestaltung auch Kolben bzw. Trennelemente 120, die in mehreren Ausnehmungen geführt sind.

Wird in einem weiteren Schritt das Medium M2 in den zweiten Bereich V2 eingebracht, unter einem identischen Druck (P2=P1) zum Druck P1 des Mediums M1 im ersten Bereich V1, so ist in diesem Ausführungsbeispiel die Kraftwirkung auf das Trennelement 120 bemessen, dass das Trennelement 120 in eine Begrenzungsposition gelangt, in der es den ersten Bereich V1 minimiert. Durch Bewegung, insbesondere Verschiebung des Trennelements 120, wird das Medium M1 aus dem ersten Bereich V1 ausgetrieben. In einer anderen Ausführungsform kann aber auch eine Maximierung vorgesehen sein.

Bei gleichem Druck - dem Gleichgewichtsdruck - in den ersten und zweiten Bereichen V1 bzw. V2 resultiert eine Differenzkraft proportional zur Flächendifferenz der ersten und zweiten Kontaktflächen F1 bzw. F2 des Kolbes bzw. des Trennelements 120. Im Ausführungsbeispiel ist die dem ersten Bereich V1, zugewandte erste Kontaktfläche F1 kleiner als die dem zweiten Bereich zugewandte zweite Kontaktfläche F2. Der Kolben bzw. das Trennelement 120 wird somit aufgrund der Differenzkraft in Richtung des ersten Bereichs V1 verschoben, bis das Trennelement 120 unter Ausnutzung des Bewegungsspielraums L, in Anlage mit einem Begrenzungselement, in diesem Fall mit dem Zentralkörper 110, in eine Begrenzungsposition gelangt. Der erste Bereich V1, begrenzt durch die Ausnehmung und das Trennelement 120, weist in dieser Stellung des Trennelements 120 eine Minimalabmessung auf, das Medium M1 ist in diesem Fall im Wesentlichen aus dem Dosierbehälter entfernt bzw. um die abzumessende Menge an Medium M1 gegenüber einer zweiten Begrenzungsposition des Trennelements 120 reduziert. Wie einfach zu erschließen ist, könnte eine Maximierung des ersten Bereichs V1 dadurch erreicht werden, das die Kontaktfläche F1 größer gegenüber der Kontaktfläche F2 des zweiten Bereichs V2 gestaltet wird.

Der Bewegungsspielraum L des Trennelements 120 wird bevorzugt durch ein Begrenzungselement limitiert, das in diesem Fall im Übergangsbereich zwischen den ersten und zweiten Bereichen V1 bzw. V2 durch eine unterschiedliche Abmessung der Ausnehmung bzw. Bohrung realisiert ist. Wie bereits angedeutet könnte aber auch eine Variation der Querschnittsform im Übergangsbereich ein Begrenzungselement bilden. Darüberhinaus könnte das Begrenzungselement auch unabhängig, räumlich getrennt vom Übergangsbereich des ersten und zweiten Bereichs V1 bzw. V2 realisiert sein, beispielsweise durch einen entsprechenden Anschlag, der in Anlage mit dem Kolben bzw. dem Trennelement 120 gelangt.

Durch den Gleichgewichtsdruck (P1=P2) ist ein Arbeitspunkt der Dosiervorrichtung 1 festgelegt, der relativ leicht einzustellen ist. Beispielsweise könnte das zweite Medium M2 in dem Medienbehälter 200 dazu Verwendung finden. Bevorzugt ist eine identische Druckquelle für das erste bzw. zweite Medium M1 bzw. M2 vorgesehen.

In einer Weiterbildung kann beispielsweise der Gleichgewichtsdruck dadurch festgelegt werden, dass sowohl der Dosierbehälter 100 als auch der Medienbehälter 200 neben Anschlüssen 111, 211, die eine Verbindung zwischen dem Medienbehälter 200 und dem Dosierbehälter 100 realisieren, einen zusätzlichen Medienanschluss 112 bzw. 212 aufweisen. Der zusätzliche Medienanschluss 112 des Dosierbehälters 100 ist im beschriebenen Ausführungsbeispiel mit dem zweiten Bereich V2 des Dosierbehälters V2 zur Zuführung des Mediums M2 verbunden, der zusätzliche Medienanschluss 212 des Medienbehälters 200 ist mit einem Aufnahmeraum 220 für das zweite Medium M2 innerhalb des Medienbehälters 200 verbunden.

Der jeweilige zusätzliche Medienanschluss 112 bzw. 212 steht dabei mit einer gemeinsamen Versorgungsleitung in Verbindung, die zur Zuführung des zweiten Mediums M2 - in diesem Fall der Druckluft - dient. Über diese Versorgungsleitung kann ein Druck P2 sowohl in dem zweiten Bereich V2 des Dosierbehälters 100, als auch in dem Aufnahmeraum 220 für das zweite Medium M2 erzeugt werden. Der Druck P2 des zweiten Mediums M2 in dem Aufnahmeraum 220 wird an den Aufnahmeraum 210 für das erste Medium M1 übertragen, sodass der Druck P1 des ersten Mediums M1 identisch ist mit dem Druck P2 des zweiten Mediums M2; das Medium M1 befindet sich also in Drucksynchronisation mit dem Medium M2 und ein Gleichgewichtsdruck (P1=P2) ist festgelegt. Der unveränderte Druck des zweiten Mediums M2 wird somit sowohl zur Steuerung des Einbringens des ersten Mediums M1 in den Dosierbehälter 100 benutzt als auch zur Steuerung des Ausbringens der abgemessenen Menge des ersten Mediums M1 aus dem Dosierbehälter 100. Eine Reduktion der wechselwirkenden Parameter der Dosiervorrichtung 1 ist damit erreicht und somit das Dosierergebnis verbessert.

Ein weiterer Aspekt der Erfindung sieht vor, dass bei anliegendem Gleichgewichtsdruck, der identisch auf Begrenzungsflächen des ersten und zweiten Bereichs V1 bzw. V2 wirkt, das Trennelement 120 eine Kraftwirkung erfährt, die proportional bzw. umgekehrt proportional zum Gleichgewichtsdruck (P1 = P2) ist.

Besonders vorteilhaft ist dies bei einem zu dosierenden ersten Medium M1, das gasförmig ist. Mit Hilfe eines Gegenkraft- bzw. Gegendruckerzeugers, der beispielsweise durch ein in den Bereich VC eingebrachtes Gas realisiert ist, kann so ein selbstregulierendes System geschaffen werden, welches Druckschwankungen des Mediums M1 dadurch kompensiert, dass der zur Abmessung bzw. Dosierung bestimmte erste Bereich V1 durch die Verschiebung des Trennelements 120 begrenzt wird, bis sich ein Kräftegleichgewicht zwischen zum Gleichgewichtsdruck proportionaler bzw. umgekehrt proportionaler Kraft und einer Gegenkraft einstellt. Auf diese Weise ist es möglich die Stoffmenge eines Druckschwankungen unterliegenden Gases konstant abzumessen.

Insbesondere kann mit einem Gegendruckerzeuger die zum Gleichgewichtsruck proportionale Kraft eine umgekehrt proportionale Kraft erzeugen. Als Gegendruckerzeuger sind neben dem vorbeschriebenen Beispiel auch weitere Mittel vorstellbar, beispielsweise eine Feder, ein viskoses Medium oder auch eine elektrisch einstellbare Kraft, beispielsweise durch Induktion in Wechselwirkung mit dem Trennelement 120 realisiert.

Um das Austreiben bzw. das Auslassen des ersten Mediums M1 aus dem Dosierbehälter 100 zu verbessern, ist bevorzugt vorgesehen, dass wenigstens einer der ersten oder zweiten Bereiche V1 bzw. V2 einen Einlass- 111 und eine, vorzugsweise räumlich getrennte Auslassöffnung 113 aufweist, wobei insbesondere die Einlassöffnung 111 mit einem ersten Ventil VIN verbunden ist und bevorzugt die Auslassöffnung 113 mit einem zweiten Ventil VOUT. Zur automatischen Steuerung des Medienauslassvorgangs könnten sich die Arbeitsdrücke der ersten und zweiten Ventile VIN bzw. VOUT unterscheiden.

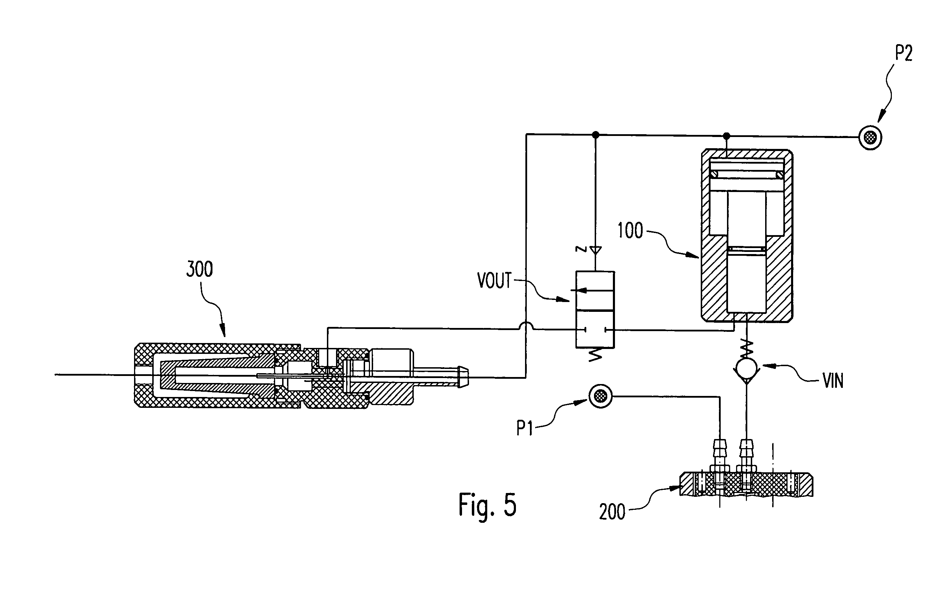

Bevorzugt verfügt das zweite Ventil VOUT jedoch über einen Steuerungsanschluss, der ein Öffnen bzw. Schließen des Ventils bei einem anliegenden Steuerungssignal gestattet. Im dargestellten Ausführungsbeispiel ist das Steuerungssignal, wie beispielsweise aus den Figuren 1 und 5 ersichtlich ist, ebenfalls durch den Druck P2 des zweiten Mediums M2 realisiert. Das zweite Ventil VOUT ist also mit dem zweiten Medium M2, insbesondere zum Zwecke der Steuerung verbunden.

Somit kann zeitsynchron zum Anlegen des Gleichgewichtsdrucks (P1=P2) an den Dosierbehälter 100 mittels des Mediums M2 ein Öffnen des zweiten Ventils VOUT erreicht werden. Das Ventil VOUT wird so bei Beginn des Austreibens des Mediums M1, beispielsweise des Pflegeöls, zeitsynchron gesteuert.

Der Dosierbehälter 100 ist über das zweite Ventil VOUT mit einem Zerstäuber 300 verbunden, sodass nunmehr das Pflegeöl, also das erste Medium M1, über den Zerstäuber 300 in den Innenraum eines zahnärztlichen Instruments, beispielsweise eines zahnärztlichen Handstücks, gesprüht werden kann.

Der Zerstäuber 300 weist ein Sintermaterial, insbesondere einen Sinterfilter auf, der zunächst mit dem Pflegeöl - dem ersten Medium M1 - getränkt wird. Die von der Dosiervorrichtung 1, insbesondere dem Dosierbehälter 100 abgemessene Menge an Pflegeöl (erstes Medium M1), ist dabei so gewählt, dass diese Menge vollständig bzw. im Gesamten von dem Sinterfilter aufgenommen werden kann.

Darüberhinaus ist der Zerstäuber 300 ebenfalls mit dem zweiten Medium M2 verbunden, insbesondere mit dem Druckluftanschluss. Die Druckluft (wobei hier wie bereits angedeutet auch andere Gase vorgesehen sein könnten) durchströmt den Sinterfilter in der Art, dass das Pflegeöl aus dem Sinterfilter ausgetrieben wird und als Nebel in ein zahnärztliches Instrument eingeblasen wird, um dort die beabsichtigte Pflege des Instruments zu gewährleisten.

Somit ist mit Hilfe des zweiten Mediums M2 ebenfalls eine zeitgenaue Steuerung des Zerstäubers 300 gegeben, die darüberhinaus auch noch den Druck P1 des ersten Mediums M1, also des Pflegeöls, bestimmt und somit die Anzahl der Wechselwirkungsparameter des Pflegesystems minimiert und die Dosierung des Pflegeöls dadurch verbessert.

Anzumerken bleibt, dass ein neuerlicher Zyklus der Dosierung bzw. Vernebelung des ersten Mediums M1 dadurch erreicht werden kann, dass die Druckluft abgeschaltet wird und die Druckluftanschlüsse des Zerstäubers 300, des Dosierbehälters 100, sowie auch des zweiten Ventils VOUT entlüftet werden, bzw. unter Umgebungsdruck gesetzt werden.

Ein erfindungsgemäßes Verfahren zur Entnahme eines ersten Mediums M1 aus einem unter Druck stehenden Medienbehälter 200 mit einer Dosiervorrichtung 1 nach einem Aspekt der Erfindung sieht also einen Schritt vor, der das Überführen eines ersten Mediums M1 aus dem Medienbehälter 200 in einen ersten Bereich V1 eines Dosierbehälters 100, bis der erste Bereich V1 vollständig gefüllt ist, realisiert und einen weiteren Schritt, der das Austreiben des Mediums M1 aus dem Dosierbehälter 100 durch Füllen des zweiten Bereichs V2 mit einem zweiten Medium M2 erreicht.

Wie aus dem beschriebenen Ausführungsbeispiel deutlich wird, überschreitet der Druck unter dem das zweite Medium M2 in den Dosierbehälter 100 eingebracht wird, den Druck unter dem das erste Medium M1 in den Dosierbehälter 100 eingebracht wird nicht.

Weiterhin wird aus dem Vorbeschriebenen deutlich, dass ein Verfahren zum Betrieb eines Desinfektions- und Pflegegeräts für zahnärztliche Instrumente vorsieht, eine Dosiervorrichtung 1 für ein erstes Medium M1 und wenigstens eine weitere Vorrichtung zur Ausbringung des ersten Mediums M1, insbesondere einen Zerstäuber 300, durch ein gemeinsames unter Druck stehendes Medium, insbesondere das zweite Medium M2, zu steuern, wobei insbesondere eine zeitliche Koordination bzw. Steuerung erfolgt.

Somit wird deutlich, dass die Erfindung ein Desinfektions- und Pflegesystem für zahnärztliche Instrumente zur Verfügung stellt, das eine zeitlich genaue Steuerung des Pflegeablaufs und eine verbesserte Dosierung eines unter Druck stehenden Mediums mit Hilfe einer Dosiervorrichtung 1 ermöglicht und somit das Desinfektions- und Pflegergebnis wesentlich verbessert. Wie die Realisierung in einem gemeinsamen Ausführungsbeispiel ebenfalls zeigt, sind sämtliche Aspekte und Weiterbildungen der Erfindung beliebig miteinander kombinierbar.

## Patentansprüche

1. Dosiervorrichtung (1) zur Entnahme eines Mediums (M1) aus einem unter Druck stehenden Medienbehälter (200),
mit einem zur Abmessung einer Menge des Mediums (M1) ausgebildeten Dosierbehälter (100),
der einen ersten Bereich (V1)
und einen zweiten Bereich (V2) aufweist,
wobei der erste von dem zweiten Bereich (V1, V2) durch ein bewegliches Trennelement (120) getrennt ist,
**dadurch gekennzeichnet,**
**dass** das Trennelement (120) eine dem ersten Bereich (V1) zugewandte erste Kontaktfläche (F1) aufweist,
die den ersten Bereich (V1) begrenzt bzw. abschießt,
und eine dem zweiten Bereich (V2) zugewandte zweite Kontaktfläche (F2), die den zweiten Bereich (V2) begrenzt bzw. abschließt,
wobei die erste Kontaktfläche (F1) und die zweite Kontaktfläche (F2) unterschiedliche Flächenmaße aufweisen.

2. Dosiervorrichtung (1) zur Entnahme eines Mediums (M1) aus einem unter Druck stehenden Medienbehälter (200),
mit einem zur Abmessung einer Menge des Mediums (M1) ausgebildeten Dosierbehälter (100),
der einen ersten Bereich (V1)
und einen zweiten Bereich (V2) aufweist,
wobei der erste von dem zweiten Bereich (V1, V2) durch ein bewegliches Trennelement (120) getrennt ist,
**dadurch gekennzeichnet, dass** das Trennelement (120) in der Art ausgebildet ist, dass bei einem Gleichgewichtsdruck, welcher identisch auf Begrenzungsflächen des ersten und zweiten Bereichs (V1, V2) wirkt, das Trennelement (120) eine Kraftwirkung erfährt, die proportional bzw. umgekehrt proportional zu dem Gleichgewichtsdruck ist.

3. Dosiervorrichtung nach einem der vorhergehenden Ansprüche,
**dadurch gekennzeichnet,**
**dass** das Trennelement (120) in dem Dosierbehälter (100) im Wesentlichen frei beweglich ist und bevorzugt lediglich über Dichtelemente (121, 122) mit dem Dosierbehälter (100) in Kontakt steht.

4. Dosiervorrichtung nach einem der vorhergehenden Ansprüche,
**dadurch gekennzeichnet,**
**dass** das Trennelement (120) durch einen Kolben gebildet wird, der wenigstens teilweise in einer Bohrung des Dosierbehälters (100) frei beweglich ist.

5. Dosiervorrichtung zur Entnahme eines Mediums (M1) aus einem unter Druck stehenden Medienbehälter (200),
mit einem zur Abmessung einer Menge des Mediums (M1) ausgebildeten Dosierbehälter (100), der einen ersten Bereich (V1) und einen zweiten Bereich (V2) aufweist,
**dadurch gekennzeichnet,**
**dass** der Medienbehälter (200) mehrere voneinander getrennte Medien (M1, M2), wenigstens ein erstes (M1) und zweites Medium (M2), enthält,
wobei das erste Medium (M1) mit dem ersten Bereich (V1) in der Art in Verbindung steht, dass das Medium (M1) in den Dosierbehälter gelangen kann, und das zweite Medium (M2) einen Druck (P2) aufweist, der in der Art auf das erste Medium (M1) wirkt, dass das erste Medium (M1) in den Dosierbehälter (100) gelangt, und
der Dosierbehälter (100) dazu ausgebildet ist, mit Hilfe des Drucks (P2) das erste Medium (M1) aus dem Dosierbehälter (100) zu treiben.

6. Dosiervorrichtung nach einem der vorhergehenden Ansprüche,
**dadurch gekennzeichnet,**
**dass** wenigstens einer der ersten oder zweiten Bereiche (V1, V2) eine Einlassöffnung und eine, vorzugsweise räumlich getrennte, Auslassöffnung aufweist,
wobei insbesondere die Einlassöffnung mit einem ersten Ventil (VIN) verbunden ist
und die Auslassöffnung mit einem zweiten Ventil (VOUT) verbunden ist, wobei sich vorzugsweise darüberhinaus die Arbeitsdrücke der ersten und zweiten Ventile (VIN, VOUT) unterscheiden.

7. Dosiervorrichtung nach einem der vorhergehenden Ansprüche,
**dadurch gekennzeichnet,**
**dass** sowohl der Dosierbehälter (100) als auch der Medienbehälter (200), neben Anschlüssen (111, 211), die eine Verbindung zwischen dem Medienbehälter (200) und dem Dosierbehälter (100) bilden, einen zusätzlichen Medienanschluss (112, 212) aufweisen.

8. Dosiervorrichtung nach Anspruch 7,
**dadurch gekennzeichnet,**
**dass** der zusätzliche Anschluss (112, 212) mit einer gemeinsamen Versorgungsleitung verbunden ist.

9. Medienbehälter (200) für ein Pflegegerät zur Reinigung- bzw. Pflege von medizinischen Instrumenten,
mit einem Aufnahmeraum (210) für ein erstes Medium (M1) zur Pflege bzw. Reinigung von medizinischen Instrumenten und
einem Aufnahmeraum (220) für ein zweites Medium (M2),
wobei der Aufnahmeraum (210) für das erste Medium (M1) in Druckaustausch mit dem Aufnahmeraum (220) für das zweite Medium (M2) steht, und
der Aufnahmeraum (210) für das erste Medium (M1) mit Hilfe eines externen Drucks (P2), der auf den Aufnahmeraum (220) für das zweite Medium (M2) wirkt, entleerbar ist.

10. Pflegegerät für medizinische Instrumente, mit einer Dosiervorrichtung nach einem der vorhergehenden Ansprüche 1 bis 8.

11. Pflegegerät nach Anspruch 10,
**dadurch gekennzeichnet,**
**dass** der Dosierbehälter (100) in Verbindung mit einem Zerstäuber (300) für das Medium (M1) steht.

12. Pflegegerät nach Anspruch 11,
**dadurch gekennzeichnet,**
**dass** der Zerstäuber (300) in Verbindung mit einem Druckluftanschluss steht, wobei vorzugsweise der Dosierbehälter (200) ebenfalls mit dem Druckluftanschluss verbunden ist.

13. Pflegegerät nach einem der vorhergehenden Ansprüche 11 oder 12 ,
**dadurch gekennzeichnet,**
**dass** der Dosierbehälter (100) dazu ausgebildet ist, eine Menge an Medium (M1) abzumessen, die im Gesamten von einem Sinterfilter in dem Zerstäuber (300) aufgenommen werden kann.

14. Verfahren zur Entnahme eines Mediums (M1) aus einem unter Druck stehenden Medienbehälter (200),
mit einer Dosiervorrichtung (1) nach einem der vorhergehenden Ansprüche 1 bis 9, aufweisend die Schritte
• Überführen eines Mediums (M1) aus dem Medienbehälter (200) in einen ersten Bereich (V1) eines Dosierbehälters (100) bis der erste Bereich vollständig gefüllt ist,
• Austreiben des Mediums (M1) aus dem Dosierbehälter (100) durch Füllen des zweiten Bereichs (V2) mit einem anderen Medium (M2).

15. Verfahren zur Entnahme eines Mediums (M1) aus einem unter Druck stehenden Medienbehälter (200), nach Anspruch 14
**dadurch gekennzeichnet,**
**dass** der Druck unter dem das zweite Medium (M2) in den Dosierbehälter eingebracht wird, den Druck unter dem das erste Medium (M1) in den Dosierbehälter eingebracht wird nicht übersteigt.

16. Verfahren zum Betrieb eines Desinfektions- und Pflegegeräts für zahnärztliche Instrumente,
**dadurch gekennzeichnet,**
**dass** ein unter Druck stehendes zweites Medium (M2) eine Dosiervorrichtung (1) für ein erstes Medium (M1)
und eine weitere Vorrichtung zur Ausbringung eines ersten Mediums (M1), steuert, wobei bevorzugt eine zeitliche Steuerung erfolgt.
